(19) Europäisches Patentamt
European Patent Office
Office européen des brevets

(11) **EP 4 303 265 A1**

(12) **EUROPEAN PATENT APPLICATION**
published in accordance with Art. 153(4) EPC


(43) Date of publication:
**10.01.2024 Bulletin 2024/02**

(21) Application number: **22856267.4**

(22) Date of filing: **12.08.2022**

(51) International Patent Classification (IPC):
***C08L 63/00** (2006.01)* ***C08L 51/04** (2006.01)*
***C08F 279/02** (2006.01)* ***C08F 212/08** (2006.01)*
***C08G 59/42** (2006.01)*

(52) Cooperative Patent Classification (CPC):
**C08F 212/08; C08F 279/02; C08G 59/42; C08L 51/04; C08L 63/00**

(86) International application number:
**PCT/KR2022/012076**

(87) International publication number:
**WO 2023/018274 (16.02.2023 Gazette 2023/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.08.2021 KR 20210107589**
**11.08.2022 KR 20220100467**



(71) Applicant: **Lg Chem, Ltd.**
**Seoul 07336 (KR)**

(72) Inventors:
- **HAN, Sang Hoon**
**Daejeon 34122 (KR)**
- **YOO, Ki Hyun**
**Daejeon 34122 (KR)**
- **JEONG, Min Ah**
**Daejeon 34122 (KR)**
- **KIM, Yong Kyun**
**Daejeon 34122 (KR)**

(74) Representative: **Hoffmann Eitle Patent- und Rechtsanwälte PartmbB**
**Arabellastraße 30**
**81925 München (DE)**


(54) **CURABLE RESIN COMPOSITION**


(57) The present invention relates to a graft copolymer, and to a graft copolymer composition having excellent particulate dispersibility in a curable resin such as an epoxy resin and being applicable as a particulate impact reinforcing agent, a curable resin composition including same, and methods of preparing them.


FIG. 2

GRAFT COPOLYMER LATEX
GRAFT COPOLYMER POWDER
GRAFT COPOLYMER POWDER/EPOXY RESIN POWDER DISPERSION
EPOXY RESIN COMPOSITION
GRAFT COPOLYMER PARTICLE
WATER
EPOXY RESIN





Processed by Luminess, 75001 PARIS (FR)

## Description

### TECHNICAL FIELD

[Cross-reference to Related Applications]

The present application claims the benefit of priority based on Korean Patent Application No. 10-2021-0107589, filed on August 13, 2021, the entire contents of which are incorporated herein by reference.

[Technical Field]

The present invention relates to a curable resin which is applicable as a toughening agent for an adhesive, particularly, a structural adhesive.

### BACKGROUND ART

Curable resins represented by an epoxy resin are used in various fields including electrical and electronic products, automotive parts, building materials, or the like. The curable resin is used together with an additive including an inorganic filler, a release agent, rubber particulates having rubbery properties, or the like, rather than being used alone to supplement physical properties, processability, or the like. Among the curable resins, the epoxy resin often shows brittle characteristics, and improvement of impact resistance or adhesion strength is required.

As a method of improving the impact resistance of the epoxy resin, a method of using together with a graft copolymer including a rubbery polymer as an impact reinforcing agent has been suggested. The graft copolymer has the particle shape of a core-shell structure including a core including a rubbery polymer and a shell formed on the core through graft polymerization.

An epoxy resin, in which the graft copolymer is applied, is used as a structural adhesive. In this case, the structural adhesive is applied three-dimensionally along a dispensing line, and it is important to secure a thixotropic index, i.e., thixotropy and restoring force to improve workability.

Meanwhile, in order to apply the graft copolymer as an impact reinforcing agent for an epoxy resin, the graft copolymer is required to disperse in the epoxy resin, and as a method of dispersing the graft copolymer in the epoxy resin, there are a liquid phase dispersion method and a particulate phase dispersion method.

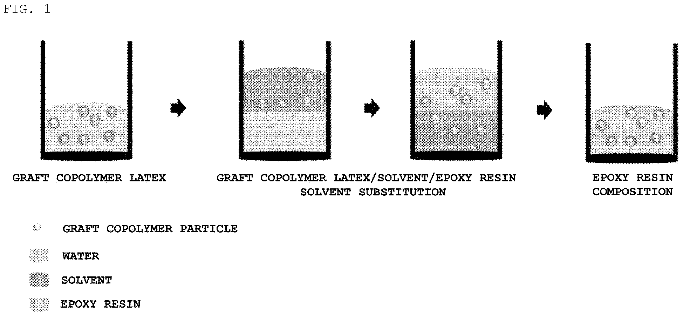

By the liquid phase dispersion method, as shown in FIG. 1, a graft copolymer is dispersed in an epoxy resin by a stepwise solvent substitution method, wherein, in a graft copolymer in a latex state in which the graft copolymer is dispersed in water, the water is substituted with a solvent, and the solvent is substituted with an epoxy resin. Such a liquid phase dispersion method has merits of dispersing the graft copolymer in a homogeneous dispersion matrix of an epoxy resin. However, there are storage problems of storing the graft copolymer in a latex state until being dispersed in order to apply the graft copolymer to the epoxy resin as the impact reinforcing agent, and problems in environmental respects due to the water and the solvent, separately discharged from the substitution process of the graft copolymer and the solvent.

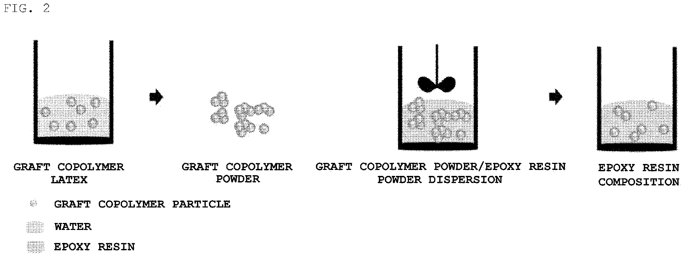

By the particulate phase dispersion method, as shown in FIG. 2, there are merits of low process costs in view of directly dispersing an agglomerated dry powder from a graft copolymer latex, i.e., a particulate phase graft copolymer in an epoxy resin. However, there are problems of substantially very difficult or impossible dispersion of the graft copolymer particulate material when directly introducing into an epoxy resin, because the viscosity of the graft copolymer particulate material becomes very high.

Accordingly, in the application of an impact reinforcing agent to a curable resin composition such as an epoxy resin, in order to improve both processing cost and environmental aspects, and in order to apply the particulate phase dispersion method, the improvement of the particulate dispersibility of a graft copolymer particulate material is required.

[Prior Art Document]

[Patent Document]

(Patent Document 1) JP 2006-104328 A

## DISCLOSURE OF THE INVENTION

### TECHNICAL PROBLEM

The present invention has been made to solve the above-described problems of the conventional technique, and has an object of providing a curable resin composition having excellent thixotropy and restoring force.

Particularly, another object of the present invention is to provide a curable resin composition in which a graft copolymer is applied in a particulate phase, and has excellent thixotropy and restoring force.

### TECHNICAL SOLUTION

In order to solve the above-described tasks, the present invention provides a curable resin composition.

1) The present invention provides a curable resin composition comprising a continuous phase and a dispersion phase, wherein the continuous phase comprises a curable resin, the dispersion phase comprises a graft copolymer, and a viscosity at 25°C, measured using Plate PP25 with a diameter of 25 mm by a cone & plate viscometer, is from 500 Pa.s to 2,000 Pa.s.
2) The present invention provides the curable resin composition according to 1), wherein the curable resin composition has a viscosity at 25°C of 1,100 Pa.s to 2,000 Pa.s.
3) The present invention provides the curable resin composition according to 1) or 2), wherein the curable resin composition has a thixotropic index calculated by Mathematical Equation 1 of 1.5 to 2.5.

[Mathematical Equation 1]

Thixotropic index = [viscosity at 25°C (Pa.s) at 2.4 1/s] / [viscosity at 25°C (pa.s) at 24 1/s]

4) The present invention provides the curable resin composition according to any one of 1) to 3), wherein the curable resin composition has a restoring force calculated by Mathematical Equation 2 of 60% or more when changing a shear rate according to steps (1) to (3) below.

(1) a shear rate of 2.4 1/s at 25°C,
(2) a shear rate of 24 1/s at 25°C,
(3) a shear rate of 2.4 1/s at 25°C,

[Mathematical Equation 2]

Restoring force = [(viscosity at 25°C (pa.s) measured in (3))/(viscosity at 25°C (pa.s) measured in (1))] X 100.

5) The present invention provides the curable resin composition according to any one of 1) to 4), wherein the curable resin composition comprises the continuous phase in 50 wt% to 99 wt% and the dispersion phase in 1 wt% to 50 wt%.
6) The present invention provides the curable resin composition according to any one of 1) to 5), wherein the curable resin is an epoxy resin.
7) The present invention provides the curable resin composition according to any one of 1) to 6), wherein the graft copolymer is a core-shell type graft copolymer comprising a core comprising a rubbery polymer; and a shell formed by graft polymerizing a graft monomer to the rubbery polymer, the graft copolymer comprises the core in 72 wt% to 83 wt%, and the core has an average particle diameter of 250 nm or more.
8) The present invention provides the curable resin composition according to 7), wherein the rubbery polymer comprises one or more monomer units selected from the group consisting of a conjugated diene-based monomer unit and an alkyl acrylate-based monomer unit.
9) The present invention provides the curable resin composition according to 7) or 8), wherein the graft monomer comprises a methyl (meth)acrylate monomer, an alkyl (meth)acrylate-based monomer of 2 to 12 carbon number and a crosslinkable monomer.

10) The present invention provides the curable resin composition according to any one of 7) to 9), wherein the graft monomer further comprises an aromatic vinyl-based monomer.
11) The present invention provides the curable resin composition according to any one of 7) to 10), wherein the graft copolymer comprises the core in 75 wt% to 80 wt%, and the shell in 20 wt% to 25 wt%.
12) The present invention provides the curable resin composition according to any one of 7) to 11), wherein an average particle diameter of the core is from 250 nm to 350 nm.
13) The present invention provides the curable resin composition according to any one of 7) to 12), wherein the graft copolymer has a weight average molecular weight of the shell of 40,000 g/mol or less.

## ADVANTAGEOUS EFFECTS

The curable resin composition of the present invention has excellent thixotropy and restoring force, and could apply a graft copolymer composition in a particulate phase to achieve excellent productivity, and due to the graft copolymer dispersed in the curable resin composition, excellent effects of mechanical properties such as impact resistance could be achieved.

## BRIEF DESCRIPTION OF DRAWINGS

FIG. 1 is a process diagram briefly showing a liquid phase dispersion method for dispersing a graft copolymer composition in an epoxy resin.
FIG. 2 is a process diagram briefly showing a particulate phase dispersion method for dispersing a graft copolymer composition in an epoxy resin.

## BEST MODE FOR CARRYING OUT THE INVENTION

Hereinafter, the present invention will be described in more detail to assist the understanding of the present invention.

It will be understood that words or terms used in the description and claims of the present invention shall not be interpreted as the meaning defined in commonly used dictionaries. It will be understood that the words or terms should be interpreted as having a meaning that is consistent with their meaning in the technical idea of the invention, based on the principle that an inventor may properly define the meaning of the words to best explain the invention.

The term "monomer unit" in the present invention may represent a component or a structure derived from the monomer or the material itself, in a particular embodiment, may mean a repeating unit formed in the polymer during polymerizing a polymer through the participation of the monomer injected in polymerization reaction.

The term "composition" used in the present invention includes a reaction product and a decomposition product formed from the materials of a corresponding composition as well as a mixture of materials including the corresponding composition.

The present invention provides a curable resin composition. The curable resin composition may include a graft copolymer as an impact reinforcing agent, and in a particular embodiment, the graft copolymer may be dispersed in a particulate phase.

According to an embodiment of the present invention, the curable resin composition includes a continuous phase and a dispersion phase, the continuous phase includes a curable resin, the dispersion phase includes a graft copolymer, and a viscosity at 25°C, measured using Plate PP25 with a diameter of 25 mm by a cone & plate viscometer, may be from 500 Pa.s to 2,000 Pa.s.

According to an embodiment of the present invention, the curable resin composition may be a curable resin composition applicable as an impact reinforcing agent to an adhesive, particularly, a structural adhesive. In this case, in terms of securing thixotropy and restoring force for improving the workability of an adhesive composition applied three-dimensionally along a dispensing line, the viscosity at 25°C measured using Plate PP25 with a diameter of 25 mm as a cone & plate viscometer is characterized to be from 500 Pa.s to 2,000 Pa.s.

According to an embodiment of the present invention, the curable resin composition may have a viscosity at 25°C measured using Plate PP25 with a diameter of 25 mm by a cone & plate viscometer is characterized to be from 500 Pa.s or more, 600 Pa.s or more, 700 Pa.s or more, 800 Pa.s or more, 900 Pa.s or more, 1,000 Pa.s or more, 1,100 Pa.s or more, 1,200 Pa.s or more, 1,300 Pa.s or more, or 1,400 Pa.s or more, and 2,000 Pa.s or less, 1,900 Pa.s or less, 1,800 Pa.s or less, 1,700 Pa.s or less, 1,600 Pa.s or less, 1,500 Pa.s or less, or 1,400 Pa.s or less. Within this range, the thioxtropy and restoring force may be secured, simultaneously. Particularly, if the viscosity is less than the above-range, the thixotropy may be deteriorated, and if the viscosity is higher than the range, there are problems in that the restoring force may be deteriorated.

According to an embodiment of the present invention, the curable resin composition may have a thixotropic index calculated by Mathematical Equation 1 of 1.5 to 2.5. In a particular embodiment, the thixotropic index calculated by Mathematical Equation 1 may be 1.5 or more, 1.6 or more, 1.7 or more, 1.8 or more, or 1.9 or more, and 2.5 or less, 2.4 or less, 2.3 or less, 2.2 or less, 2.1 or less, or 2.0 or less. Within this range, if an adhesive composition is applied three-dimensionally along a dispensing line, the adhesive composition may be applied in a dilute state, the application may be smooth, and the adhesive composition in a coated state to an adherend may not flow.

[Mathematical Equation 1]

Thixotropic index = [viscosity at 25°C (Pa.s) at 2.4 1/s] / [viscosity at 25°C (pa.s) at 24 1/s]

According to an embodiment of the present invention, the curable resin composition may have a restoring force calculated by Mathematical Equation 2 of 60% or more when changing a shear rate according to steps (1) to (3) below. In a particular embodiment, the restoring force calculated by Mathematical Equation 2 may be 60% or more, 61% or more, 62% or more, 63% or more, 64% or more, 65% or more, 66% or more, 67% or more, 68% or more, 69% or more, 70% or more, 71% or more, 72% or more, 73% or more, 74% or more, 75% or more, 76% or more, 77% or more, 78% or more, or 79% or more, and 100% or less, 90% or less, 80% or less, 75% or less, 70% or less, or 65% or less. Within this range, the workability of the adhesive composition applied three-dimensionally along a dispensing line may be sufficiently secured.

(1) a shear rate of 2.4 1/s at 25°C,
(2) a shear rate of 24 1/s at 25°C,
(3) a shear rate of 2.4 1/s at 25°C,

[Mathematical Equation 2]

Restoring force = [(viscosity at 25°C (pa.s) measured in (3))/(viscosity at 25°C (pa.s) measured in (1))] X 100.

According to an embodiment of the present invention, the curable resin composition includes a continuous phase and a dispersion phase, wherein the continuous phase may include a curable resin, and the dispersion phase may include a graft copolymer. In a particular embodiment, the curable resin composition may include: the continuous phase in 50 wt% to 99 wt%, 50 wt% to 80 wt%, or 50 wt% to 70 wt%; and the dispersion phase in 1 wt% to 50 wt%, 20 wt% to 50 wt%, or 30 wt% to 50 wt%.

According to an embodiment of the present invention, the curable resin may be a thermosetting resin or a photocurable resin, particularly, one or more selected from the group consisting of an epoxy resin, a phenol resin, an unsaturated polyester resin, a melamine resin and a urea resin, more particularly, an epoxy resin.

According to an embodiment of the present invention, the epoxy resin may include at least two or more epoxy bonds, and may particularly be one or more selected from the group consisting of a bisphenol A-type epoxy resin, a bisphenol F-type epoxy resin, a bisphenol AD-type epoxy resin, a bisphenol E-type epoxy resin, a naphthalene-type epoxy resin, a biphenyl-type epoxy resin, a dicyclopentadiene-type epoxy resin, a phenol novolac-type epoxy resin, an aliphatic cyclic epoxy resin and a glycidyl amine-type epoxy resin.

According to an embodiment of the present invention, the graft copolymer may play the role of an impact reinforcing agent with respect to the curable resin composition, and may be a core-shell type graft copolymer including a core including a rubbery polymer; and a shell formed by graft polymerizing a graft monomer to the rubbery polymer. The graft copolymer may include the core in 72 wt% to 83 wt%, and the core may have an average particle diameter of 250 nm or more. In this case, the particulate dispersibility of the graft copolymer with respect to a curable resin such as an epoxy resin may be improved, and the graft copolymer may be dispersed by a particulate phase dispersion method in a curable resin composition.

According to an embodiment of the present invention, in the core-shell type graft copolymer, the core may mean the graft copolymer or the rubbery polymer component itself forming a core or a core layer, and the shell may mean a polymer component or a copolymer component forming a shell or a shell layer in a shell type wrapping the core by graft polymerization to the rubbery polymer. That is, the core including the rubbery polymer may be the rubbery polymer itself, and the shell may mean a graft layer formed by graft polymerization of a graft monomer to the rubbery polymer.

According to an embodiment of the present invention, if the graft copolymer is applied as an impact reinforcing agent, the rubbery polymer is a component for providing impact resistance and may include one or more monomer units selected from the group consisting of a conjugated diene-based monomer unit and an alkyl acrylate-based monomer unit. In a particular embodiment, the rubbery polymer may be a conjugated diene-based rubbery polymer or an acryl-based rubbery polymer. In a more particular embodiment, the conjugated diene-based rubbery polymer may be one or more selected from the group consisting of a homopolymer of a conjugated diene-based monomer and a copolymer of aromatic vinyl-based monomer-conjugated diene-based monomer, and the acryl-based rubbery polymer may be a homopolymer of an alkyl acrylate-based monomer.

According to an embodiment of the present invention, the conjugated diene-based monomer of the rubbery polymer may be one or more selected from the group consisting of 1,3-butadiene, 2,3-dimehtyl-1,3-butadiene, piperylene, 3-butyl-1,3-octadiene, isoprene and 2-phenyl-1,3-butadiene, particularly, 1,3-butadiene.

According to an embodiment of the present invention, the aromatic vinyl-based monomer of the rubbery polymer may be one or more selected from the group consisting of styrene, $\alpha$-methylstyrene, 3-methylstyrene, 4-methylstyrene, 4-propylstyrene, 1-vinylnaphthalene, 4-cyclohexylstyrene, 4-(p-methylphenyl)styrene and 1-vinyl-5-hexylnaphthalene, particularly, styrene.

According to an embodiment of the present invention, the alkyl acrylate-based monomer of the rubbery polymer may be an alkyl acrylate-based monomer of 1 to 12 carbon atoms, particularly, one or more selected from the group consisting of methyl acrylate, ethyl acrylate, propyl acrylate and n-butyl acrylate, more particularly, n-butyl acrylate.

According to an embodiment of the present invention, if the graft copolymer is applied as an impact reinforcing agent, the shell is a component for improving compatibility and mechanical properties and may be a graft layer formed by graft polymerizing a graft monomer to the rubbery polymer, as described above. In a particular embodiment, the graft monomer graft polymerized to the rubbery polymer for forming the shell, may include an alkyl (meth)acrylate-based monomer.

According to an embodiment of the present invention, the alkyl (meth)acrylate-based monomer of the graft monomer may be an alkyl (meth)acrylate-based monomer of 1 to 12 carbon atoms, particularly, one or more selected from the group consisting of methyl methacrylate, ethyl methacrylate, propyl methacrylate, n-butyl methacrylate, methyl acrylate, ethyl acrylate, propyl acrylate and n-butyl acrylate.

According to an embodiment of the present invention, the alkyl (meth)acrylate-based monomer of the graft monomer may be two or more monomers selected from the group consisting of alkyl (meth)acrylate-based monomers of 1 to 12 carbon atoms, particularly, two or more selected from the group consisting of methyl methacrylate, ethyl methacrylate, propyl methacrylate, n-butyl methacrylate, methyl acrylate, ethyl acrylate, propyl acrylate and n-butyl acrylate.

According to an embodiment of the present invention, the alkyl (meth)acrylate-based monomer of the graft monomer may be a methyl (meth)acrylate monomer, and an alkyl (meth)acrylate-based monomer of 2 to 12 carbon atoms, and in this case, the weight average molecular weight of the shell may be reduced even further. Accordingly, the swelling of the shell during dispersing the graft copolymer in the curable resin may be minimized to prevent the increase of a viscosity. In this case, the alkyl (meth)acrylate-based monomer may include: 50 wt% to 99 wt%, 60 wt% to 90 wt%, or 70 wt% to 85 wt% of the methyl (meth)acrylate monomer; and 1 wt% to 50 wt%, 10 wt% to 40 wt%, or 15 wt% to 30 wt% of the alkyl (meth)acrylate-based monomer of 2 to 12 carbon atoms.

According to an embodiment of the present invention, the graft monomer may further include a crosslinkable monomer in addition to the alkyl (meth)acrylate-based monomer. That is, the graft monomer may include a methyl (meth)acrylate monomer, an alkyl (meth)acrylate-based monomer of 2 to 12 carbon atoms and a crosslinkable monomer.

According to an embodiment of the present invention, the crosslinkable monomer is for improving shell forming capacity by crosslinking during forming the shell by the graft monomer and at the same time, for further improving compatibility and mechanical properties by the shell, and may be one or more selected from a (meth)acryl-based crosslinkable monomer such as ethylene glycol di(meth)acrylate, polyethylene glycol di(meth)acrylate, 1,6-hexanediol di(meth)acrylate, allyl (meth)acrylate, trimethylolpropane tri(meth)acrylate and pentaerythritol tetra(meth)acrylate; and a vinyl-based crosslinkable monomer such as divinylbenzene, divinylnaphthalene and diallyl phthalate, particularly, polyethylene glycol diacrylate or allyl methacrylate.

According to an embodiment of the present invention, the graft monomer may further include an aromatic vinyl-based monomer. That is, the graft monomer may include a methyl (meth)acrylate monomer, an alkyl (meth)acrylate-based monomer of 2 to 12 carbon atoms and an aromatic vinyl-based monomer.

According to an embodiment of the present invention, the aromatic vinyl-based monomer of the graft monomer may be one or more selected from the group consisting of styrene, $\alpha$-methylstyrene, 3-methylstyrene, 4-methylstyrene, 4-propylstyrene, 1-vinylnaphthalene, 4-cyclohexylstyrene, 4-(p-methylphenyl)styrene and 1-vinyl-5-hexylnaphthalene, particularly, styrene.

According to an embodiment of the present invention, if the graft monomer further includes an aromatic vinyl-based monomer, the aromatic vinyl-based monomer may be included in 0.1 wt% to 10.0 wt%, 0.5 wt% to 5.0 wt%, or 0.8 wt% to 2.0 wt% based on the total amount of the graft monomer.

In the graft copolymer according to the present invention, in order to make its dispersion possible in a curable resin composition by a particulate phase dispersion method, it is very important to control the amount of the core and the average particle diameter of the core in the graft copolymer, and further, it is preferable to control the weight average molecular weight of the shell.

According to an embodiment of the present invention, the graft copolymer may include the core in 72 wt% to 83 wt%, and particularly, 75 wt% to 83 wt%, or 75 wt% to 80 wt%. Accordingly, the graft copolymer may include the shell in 17 wt% to 28 wt%, 17 wt% to 25 wt%, or 20 wt% to 25 wt%. Within this range, if the graft copolymer is dispersed in the curable resin, the swelling of the shell may be minimized to prevent the increase of a viscosity, while sufficiently securing the compatibility of the curable resin and the graft copolymer. On the contrary, if the graft copolymer includes the core in an amount less than the above-described range, the amount of the shell in the graft copolymer may be inevitably increased by that much, and accordingly, there are problems of arising the swelling of the shell having high affinity with the curable resin, increasing a viscosity and degrading dispersibility. In addition, if the graft copolymer includes the core in an amount greater than the above-described range, the compatibility of the curable resin and the graft copolymer may drop sharply, and the increase of the viscosity due to the swelling of the shell may be prevented. However, there are problems of not achieving dispersion substantially. Meanwhile, the amounts of the core and the shell may be derived from the amount ratio of the rubbery polymer and graft monomer, injected during preparing the graft copolymer composition.

According to an embodiment of the present invention, the core may have an average particle diameter of 250 nm or more, particularly, an average particle diameter of 250 nm to 400 nm, or 250 nm to 350 nm. Within this range, the increase of viscosity may be prevented during dispersing the graft copolymer in the curable resin. If the average particle diameter of the core is less than 250 nm, the average particle diameter of the graft copolymer may be reduced by that much, unless the average particle diameter of the graft copolymer is increased by the shell. If the average particle diameter of the core and thus, the average particle diameter of the graft copolymer are insufficiently large, agglomeration among small particles may occur, and there are defects of producing the dispersibility deterioration due to the increase of the viscosity.

According to an embodiment of the present invention, the shell may have a weight average molecular weight of 40,000 g/mol or less, particularly, a weight average molecular weight of 15,000 g/mol or more, 17,000 g/mol or more, 30,000 g/mol or more, 32,000 g/mol or more, and 39,000 g/mol or less, 36,000 g/mol or less, 35,000 g/mol or less, or 33,000 g/mol or less. Within this range, during dispersing the graft copolymer in the curable resin, the compatibility of the curable resin with the graft copolymer may be sufficiently secured, and the swelling of the shell may be minimized, thereby preventing the increase of the viscosity. On the contrary, if the weight average molecular weight of the shell is higher than the above-described range, there are problems in that the shell having high affinity with the curable resin may swell, the viscosity may increase, and the dispersibility may be deteriorated. The weight average molecular weight of the shell may be controlled by the control of the injection amounts of an initiator and an activator during graft polymerizing a graft monomer in the presence of a rubbery polymer.

Like this, according to the present invention, by controlling the amount of the core and the average particle diameter of the core in the graft copolymer, in addition to the weight average molecular weight of the shell, the dispersion by a particulate phase dispersion method in the curable resin composition may become possible.

According to an embodiment of the present invention, the graft copolymer may have an average particle diameter of 250 nm to 500 nm, 250 nm to 450 nm, or 250 nm to 400 nm, and within this range, the increase of the viscosity may be prevented during dispersing the graft copolymer in the curable resin.

According to an embodiment of the present invention, the graft copolymer may be prepared according to the method of preparing a graft copolymer subsequently described. The method of preparing a graft copolymer includes: a step of preparing a rubbery polymer latex including a rubbery polymer having an average particle diameter of 250 nm or more (S1) ; and a step of injecting a graft monomer and graft polymerizing in the presence of 72 wt% to 83 wt% (based on the solid content) of the rubbery polymer latex to prepare a graft copolymer latex including a core-shell type graft copolymer (S2).

According to an embodiment of the present invention, in the method of preparing a graft copolymer, the type and amount of the monomer for performing each step may be the same as the type and amount of the monomer of the graft copolymer previously described.

According to an embodiment of the present invention, step (S1) is a step for preparing a rubbery polymer forming a core or a core layer in the core-shell type graft copolymer, characterized in preparing by controlling the average particle diameter of the rubbery polymer particles to 250 nm or more. Step (S2) is a step for forming a shell or a shell layer in a shell type wrapping the core, by the graft polymerization to the rubbery polymer, and the weight average molecular weight is controlled to 40,000 g/mol or less.

According to an embodiment of the present invention, step (S1) and step (S2) may be performed by emulsion polymerization, and may be performed in the presence of an emulsifier and an initiator, together with an electrolyte, a molecular weight modifier, an activator, or the like, injected for emulsion polymerization. In this case, in performing step (S1), the average particle diameter of the rubbery polymer particles may be controlled by the injection amount of the emulsifier. In performing step (S2), the weight average molecular weight of the shell may be controlled by controlling the injection amounts of the initiator and/or the activator, or by continuously injecting a graft monomer.

According to an embodiment of the present invention, the emulsifier may be one or more selected from the group consisting of a fatty acid-based emulsifier and a rosin acid-based emulsifier, and in this case, excellent effects of latex stability may be achieved.

According to an embodiment of the present invention, the injection amount of the emulsifier in step (S1) may be 0.1 parts by weight to 3.4 parts by weight, 1.0 part by weight to 3.3 parts by weight, 1.5 parts by weight to 3.2 parts by weight, 2.0 parts by weight to 3.2 parts by weight, or 2.1 parts by weight to 3.1 parts by weight, based on 100 parts by weight of the monomer for polymerizing the rubbery polymer, and within this range, the average particle diameter of the rubbery polymer particles may be controlled to 250 nm or more.

According to an embodiment of the present invention, the injection amount of the emulsifier of step (S2) may be 0.1 parts by weight to 1.0 part by weight, 0.1 parts by weight to 0.5 parts by weight, or 0.1 parts by weight to 0.3 parts by weight based on 100 parts by weight of the total sum of the rubbery polymer and the monomer for polymerizing the graft copolymer, and within this range, effects of excellent latex stability may be achieved.

According to an embodiment of the present invention, step (S1) may be performed using a water-soluble initiator which may be used during emulsion polymerization, and the water-soluble initiator may be potassium persulfate, sodium persulfate, ammonium persulfate, or the like. Step (S2) may be performed by radical polymerization using a peroxide-based, redox, or azo-based initiator which may be used for emulsion polymerization, and the redox initiator may be, for example, one or more selected from the group consisting of t-butyl hydroperoxide, diisopropylbenzene hydroperoxide and cumene hydroperoxide, and in this case, effects of providing stable polymerization environment may be achieved. If the redox initiator is used, this step may be performed by further including ferrous sulfide, sodium ethylenediaminetetraacetate and sodium formaldehyde sufoxylate as a redox catalyst that is an activator, and the weight average molecular weight of the shell may be controlled to 40,000 g/mol or less by controlling the injection amounts of the redox initiator and the redox catalyst.

According to an embodiment of the present invention, step (S2) may be performed by continuously injecting a graft monomer. In performing step (S2), if the graft monomer is injected in batch prior to the initiation of the graft polymerization reaction, problems of increasing the weight average molecular weight of the shell may arise.

According to an embodiment of the present invention, the emulsion polymerization of step (S1) and step (S2) may be performed in an aqueous solvent, and the aqueous solvent may be ion exchange water.

According to an embodiment of the present invention, the method of preparing a graft copolymer composition may include a step of agglomerating and drying for obtaining the graft copolymer latex prepared in step (S2) as a particulate phase (S3).

According to an embodiment of the present invention, the curable resin composition may further include a curing agent in addition to the curable resin and the graft copolymer. The curing agent may be one or more selected from the group consisting of an acid anhydride curing agent, an amine-based curing agent and a phenol-based curing agent.

According to an embodiment of the present invention, the acid anhydride curing agent may be one or more selected from the group consisting of phthalic anhydride, methyltetrahydrophthalic anhydride, methylhexahydrophthalic anhydride, hexahydrophthalic anhydride, tetrahydrophthalic anhydride, trialkyl tetrahydrophthalic anhydride, methyl himic anhydride, methylcyclohexene dicarboxylic anhydride, trimellitic anhydride, pyromellitic anhydride, benzophenonetetracarboxylic anhydride, ethylene glycol bistrimellitate, glycerol tristrimellitate, dodecenyl succinic anhydride, polyazellaic anhydride and poly (ethyl octadecane diacid) anhydride.

According to an embodiment of the present invention, the amine-based curing agent may be one or more selected from the group consisting of 2,5(2,6)-bis(aminomethyl) bicyclo[2,2,1]heptane, isophoronediamine, ethylenediamine, diethylenetriamine, triethylenetetramine, tetraethylenepentamine, diethyl aminopropylamine, bis(4-amino-3-methyl dicyclohexyl)methane, diaminocyclohexylmethane, bis(aminomethyl) cyclohexane, metaphenylenediamine, diaminophenylmethane, diaminodiphenylsulfone, diaminodiethyl diphenylmethane, diethyl toluenediamine, 3,3'-diaminodiphenylsulfone (3,3'-DDS), 4,4'-diaminodiphenylsulfone (4,4'-DDS), diaminodiphenyl ether (DADPE), bisaniline, benzyl dimethylaniline, 3,3'-dichloro-4,4'-diaminodiphenylmethane (MOCA), 4,4'-diaminodiphenylmethane, 2,4'-diaminodiphenylmethane, 3,3'-diaminodiphenylmethane, 3,4'-diaminodiphenylmethane, 2,2'-diaminobiphenyl, 3,3'-diaminobiphenyl, 2,4-diaminophenol, 2,5-diaminophenol, o-phenylenediamine, m-phenylenediamine, p-phenylenediamine, 2,3-tolylene diamine, 2,4-tolylene diamine, 2,5-tolylene diamine, 2,6-tolylene diamine, 3,4-tolylene diamine, methyl thio toluene diamine, diethyl toluenediamine and dicyandiamide.

According to an embodiment of the present invention, the phenol-based curing agent may be one or more selected from the group consisting of a phenol novolac resin, a cresol novolac resin, bisphenol A, bisphenol F, bisphenol AD and diallyl derivatives of bisphenols.

According to an embodiment of the present invention, the curable resin composition may further include an additive in addition to the curable resin and the graft copolymer. The additive may be a releasing agent such as silicon oil, natural wax, and synthetic wax; a particulate material such as crystalline silica, molten silica, calcium silicate and alumina; fiber such as glass fiber and carbon fiber; a flame retardant such as antimony trioxide; a halogen trapping agent such as hydrotalcite and rare earth oxides; a colorant such as carbon black and iron oxide red; and a silane coupling agent.

According to an embodiment of the present invention, the curable resin composition may be prepared by a method of preparing a curable resin composition subsequently described. The method of preparing a curable resin composition includes: a step of preparing a graft copolymer latex including the graft copolymer composition (S10); a step of agglomerating and drying the graft copolymer latex prepared in step (S10) to prepare a graft copolymer particulate material (S20); and a step of mixing a curable resin and the graft copolymer particulate material prepared in step (S20) to prepare a curable resin composition (S30), wherein step (S30) is performed by dispersing using a stirrer.

According to an embodiment of the present invention, step (S10) is a step for preparing the graft copolymer and may be performed by the method of preparing a graft copolymer described above.

According to an embodiment of the present invention, step (S20) is a step for obtaining the graft copolymer prepared in step (S10) as a particulate material and may be performed by agglomerating and drying the graft copolymer latex prepared in step (S10).

According to an embodiment of the present invention, the agglomeration of step (S20) may be performed by adding a coagulant to the graft copolymer latex. In addition, the agglomeration of step (S20) may be performed by acid agglomeration such as an aqueous sulfuric acid solution and by salt agglomeration such as sodium chloride and sodium sulfate, and both the acid agglomeration and the salt agglomeration may be performed as necessary. In this case, the acid agglomeration and the salt agglomeration may be performed simultaneously or step by step. If the agglomeration is performed step by step, the acid agglomeration may be performed first, and then, the salt agglomeration may be performed, or the salt agglomeration may be performed first, and then, the acid agglomeration may be performed. In addition, the agglomeration of step (S20) may be performed in the presence of an organic dispersant as necessary.

According to an embodiment of the present invention, the drying of step (S20) may be performed by a common drying method, and a step of dewatering the agglomerated graft copolymer latex may be further included prior to the drying as necessary.

According to an embodiment of the present invention, step (S30) is a step of mixing the curable resin and the graft copolymer by the above-described particulate phase dispersion method in applying the graft copolymer to the curable resin as an impact reinforcing agent, and may be performed by injecting the graft copolymer particulate material to the curable resin and mixing. As described above, the graft copolymer according to the present invention has excellent particulate dispersibility and may be directly dispersed in the curable resin in a particulate phase. In a particular embodiment, the viscosity at 25°C of the curable resin composition prepared in step (S30) may be 2,500 Pa.s or less, 2,000 Pa.s or less, 100 Pa.s to 2,000 Pa.s, 500 Pa.s to 1,800 Pa.s, or 1,000 Pa.s to 1,600 Pa.s. Within this range, the viscosity of the graft copolymer particulate material is low, and dispersibility is excellent.

In addition, the present invention provides an adhesive composition including the curable resin composition. The adhesive composition may include the curable resin composition as a toughening agent.

According to an embodiment of the present invention, the adhesive composition may include a main agent, a urethane resin, a curing agent, a curing accelerator and a filler, which may be used in an adhesive, in addition to the toughening agent.

Hereinafter, embodiments of the present invention will be explained in detail so that a person skilled in the art could easily perform the present invention. However, the present invention may be accomplished in various other types and is not limited to the embodiments explained herein.

## Preparation Examples

### Preparation Example 1

<Preparation of rubbery polymer latex>

To a polymerization reactor (autoclave) substituted with nitrogen, 75 parts by weight of ion exchange water, 60 parts by weight of 1,3-butadiene, 1.4 parts by weight of potassium rosinate, 0.6 parts by weight of potassium oleate, 0.9 parts by weight of potassium carbonate ($K_2CO_3$), 0.3 parts by weight of t-dodecylmercaptan, and 0.3 parts by weight of potassium persulfate ($K_2S_2O_8$) were added in batch, based on total 100 parts by weight of 1,3-butadiene, and polymerization was performed at a reaction temperature of 70°C. Then, 0.7 parts by weight of potassium oleate was injected in batch, at a point where a polymerization conversion ratio reached 30% to 40%, 20 parts by weight of 1,3-butadiene was injected in batch, and polymerization was continued at a reaction temperature of 70°C. Then, after a polymerization conversion ratio reached 60%, 20 parts by weight of 1,3-butadiene was injected in batch, a reaction temperature was raised to 80°C, polymerization was continuously performed, and the reaction was finished at a point where a polymerization conversion ratio reached 95%. Total time consumed for the polymerization was 23 hours, the gel content of a rubbery polymer latex obtained was 76%, and the average particle diameter of rubbery polymer particles was 300 nm.

In this case, the polymerization conversion ratio was calculated as the ratio of the solid weight of the rubbery polymer thus obtained with respect to the solid weight of monomers injected.

<Preparation of graft copolymer latex>

To a closed polymerization reactor substituted with nitrogen, based on total 100 parts by weight of the rubbery polymer latex (based on the solid content), methyl methacrylate, n-butyl acrylate and styrene, 80 parts by weight of the rubbery polymer latex prepared based on the solid content was injected, and 200 parts by weight of ion exchange water, 0.2 parts by weight of potassium oleate, 0.036 parts by weight of ferrous sulfide, 0.2 parts by weight of sodium ethylenediaminetetraacetate, 0.2 parts by weight of sodium formaldehyde sulfoxylate and 0.4 parts by weight of t-butyl hydroperoxide were injected in batch. Then, while continuously injecting 16 parts by weight of methyl methacrylate, 3 parts by weight of n-butyl acrylate and 1 part by weight of styrene for 3 hours, polymerization was performed at a reaction temperature of 60°C for 4 hours to prepare a graft copolymer latex. The final polymerization conversion ratio was 98.3%, and the average particle diameter of the graft copolymer particles was 318 nm.

The polymerization conversion ratio was calculated as the ratio of the solid weight of the graft copolymer thus obtained with respect to the solid weight of the rubbery polymer and monomers injected.

<Preparation of graft copolymer particulate material>

The graft copolymer latex thus prepared was diluted in distilled water so as to be 15 wt% based on the solid content, the resultant was added to an agglomeration bath, and the internal temperature of the agglomeration bath was raised to 45°C. After that, an IR1076 antioxidant was injected based on 100 parts by weight of the solid content of the graft copolymer, stirring was performed while adding an aqueous sulfuric acid solution to agglomerate, a graft copolymer and water were separated, and dewatering and drying were performed to prepare a graft copolymer particulate material.

Preparation Example 2

The same method as in Preparation Example 1 was performed during preparing the graft copolymer latex except for injecting 1.7 part by weight of the potassium rosinate instead of 1.4 parts by weight, and 0.7 parts by weight of the potassium oleate instead of 0.6 parts by weight, in Preparation Example 1. In this case, the average particle diameter of the rubbery polymer particles prepared was 255 nm, and the average particle diameter of the graft copolymer particles was 264 nm.

**Preparation Example 3**

The same method as in Preparation Example 1 was performed during preparing the graft copolymer latex except for injecting 1.0 parts by weight of the potassium rosinate instead of 1.4 parts by weight, and 0.4 parts by weight of the potassium oleate instead of 0.6 parts by weight, in Preparation Example 1. In this case, the average particle diameter of the rubbery polymer particles prepared was 338 nm, and the average particle diameter of the graft copolymer particles was 374 nm.

**Preparation Example 4**

The same method as in Preparation Example 1 was performed during preparing the graft copolymer latex except for injecting 0.072 parts by weight of ferrous sulfide instead of 0.036 parts by weight, 0.4 parts by weight of sodium ethylenediaminetetraacetate instead of 0.2 parts by weight, 0.4 parts by weight of sodium formaldehyde sulfoxylate instead of 0.2 parts by weight and 0.8 parts by weight of t-butyl hydroperoxide instead of 0.4 parts by weight, in Preparation Example 1. In this case, the average particle diameter of the graft copolymer particles was 320 nm.

**Preparation Example 5**

The same method as in Preparation Example 1 was performed during preparing the graft copolymer latex except for injecting 0.024 parts by weight of ferrous sulfide instead of 0.036 parts by weight, 0.14 parts by weight of sodium ethylenediaminetetraacetate instead of 0.2 parts by weight, 0.14 parts by weight of sodium formaldehyde sulfoxylate instead of 0.2 parts by weight and 0.27 parts by weight of t-butyl hydroperoxide instead of 0.4 parts by weight, in Preparation Example 1. In this case, the average particle diameter of the graft copolymer particles was 325 nm.

**Preparation Example 6**

The same method as in Preparation Example 1 was performed during preparing the graft copolymer latex except for injecting 0.018 parts by weight of ferrous sulfide instead of 0.036 parts by weight, 0.1 parts by weight of sodium ethylenediaminetetraacetate instead of 0.2 parts by weight, 0.1 parts by weight of sodium formaldehyde sulfoxylate instead of 0.2 parts by weight and 0.2 parts by weight of t-butyl hydroperoxide instead of 0.4 parts by weight, in Preparation Example 1. In this case, the average particle diameter of the graft copolymer particles was 321 nm.

**Examples and Comparative Examples**

**Example 1**

By using the graft copolymer particulate material prepared in Preparation Example 1, an epoxy resin composition in which the graft copolymer was dispersed was prepared as a curable resin composition by a method below.

<Preparation of epoxy resin composition in which graft copolymer is dispersed>

To a revolution-rotation mixer (planetary mixer, KMTECH, KPLM-0.6) set to 70°C, 63 parts by weight of an epoxy resin (Kukdo Chemical Co., YD-128), and 37 parts by weight of the graft copolymer particulate material prepared in Preparation Example 1 were injected, based on total 100 parts by weight of the epoxy resin and the graft copolymer, and the graft copolymer particulate material was dispersed in the epoxy resin by stirring at 50 rpm for 1 hour, at 120 rpm for 1 hour and 30 minutes, and at 60 rpm for 2 hours to prepare an epoxy resin composition in which the graft copolymer was dispersed.

**Example 2**

The same method as in Example 1 was performed except for injecting the graft copolymer particulate material prepared in Preparation Example 2 instead of the graft copolymer particulate material prepared in Preparation Example 1 in the same amount, in Example 1, to prepare an epoxy resin composition in which the graft copolymer was dispersed.

**Example 3**

The same method as in Example 1 was performed except for injecting the graft copolymer particulate material prepared in Preparation Example 3 instead of the graft copolymer particulate material prepared in Preparation Example 1 in the same amount, in Example 1, to prepare an epoxy resin composition in which the graft copolymer was dispersed.

**Example 4**

The same method as in Example 1 was performed except for injecting the graft copolymer particulate material prepared in Preparation Example 4 instead of the graft copolymer particulate material prepared in Preparation Example 1 in the same amount, in Example 1, to prepare an epoxy resin composition in which the graft copolymer was dispersed.

**Example 5**

The same method as in Example 1 was performed except for injecting the graft copolymer particulate material prepared in Preparation Example 5 instead of the graft copolymer particulate material prepared in Preparation Example 1 in the same amount, in Example 1, to prepare an epoxy resin composition in which the graft copolymer was dispersed.

**Example 6**

The same method as in Example 1 was performed except for injecting 60 parts by weight of the epoxy resin (Kukdo Chemical Co., YD-128) instead of 63 parts by weight, and 40 parts by weight of the graft copolymer particulate material prepared in Preparation Example 1 instead of 37 parts by weight in Example 1, to prepare an epoxy resin composition in which the graft copolymer was dispersed.

**Comparative Example 1**

The same method as in Example 1 was performed except for injecting 77 parts by weight of the epoxy resin (Kukdo Chemical Co., YD-128) instead of 63 parts by weight, and 23 parts by weight of the graft copolymer particulate material prepared in Preparation Example 6 instead of 37 parts by weight of the graft copolymer particulate material prepared in Preparation Example 1, in Example 1, to prepare an epoxy resin composition in which the graft copolymer was dispersed.

**Comparative Example 2**

The same method as in Example 1 was performed except for injecting 75 parts by weight of the epoxy resin (Kukdo Chemical Co., YD-128) instead of 63 parts by weight, and 25 parts by weight of the graft copolymer particulate material prepared in Preparation Example 6 instead of 37 parts by weight of the graft copolymer particulate material prepared in Preparation Example 1, in Example 1, to prepare an epoxy resin composition in which the graft copolymer was dispersed.

**Comparative Example 3**

The same method as in Example 1 was performed except for injecting 65 parts by weight of the epoxy resin (Kukdo Chemical Co., YD-128) instead of 63 parts by weight, and 35 parts by weight of the graft copolymer particulate material prepared in Preparation Example 6 instead of 37 parts by weight of the graft copolymer particulate material prepared in Preparation Example 1, in Example 1, to prepare an epoxy resin composition in which the graft copolymer was dispersed.

**Comparative Example 4**

The same method as in Example 1 was performed except for injecting 60 parts by weight of the epoxy resin (Kukdo Chemical Co., YD-128) instead of 63 parts by weight, and 40 parts by weight of the graft copolymer particulate material prepared in Preparation Example 6 instead of 37 parts by weight of the graft copolymer particulate material prepared in Preparation Example 1, in Example 1, to prepare an epoxy resin composition in which the graft copolymer was dispersed.

**Comparative Example 5**

The same method as in Example 1 was performed except for injecting 55 parts by weight of the epoxy resin (Kukdo Chemical Co., YD-128) instead of 63 parts by weight, and 45 parts by weight of the graft copolymer particulate material prepared in Preparation Example 6 instead of 37 parts by weight of the graft copolymer particulate material prepared in Preparation Example 1, in Example 1, to prepare an epoxy resin composition in which the graft copolymer was dispersed.

**Experimental Examples**

**Experimental Example 1**

With respect to the rubbery polymers and graft copolymers prepared in Preparation Examples 1 to 6, the average particle diameters of cores and graft copolymers, and the weight average molecular weight of shells were measured by methods below and are shown in Table 1 together with the content of each component and the injection method of a graft monomer during preparing a graft copolymer.

**[0098]** * Average particle diameters (nm) of core and graft copolymer: Each of rubbery polymer latexes and graft copolymer latexes prepared in Preparation Examples 1 to 6, was diluted in distilled water in a concentration of 200 ppm, and the average particle diameter was measured using a dynamic light scattering (DSL) method according to ISO 22412 using NICOMP 380.

* Weight average molecular weight (g/mol) of shell: The weight average molecular weight of a shell in the core-shell type graft copolymer obtained was measured by gel permeation chromatography (GPC, PL GPC220, Agilent Technologies) under the conditions below.

In this case, a portion of a graft copolymer solution dispersed in tetrahydrofuran was taken, a precipitate was separated by centrifuge, a supernatant was taken and filtered using a 0.45 um PTFE syringe filter, and the resultant was used as a specimen solution. Sampling was performed at a concentration of 30.0 mg/mL based on the graft copolymer, and 1.5 mg/mL of a linear polymer.

- Column: PL MiniMixed B x 2
- Solvent: tetrahydrofuran (stabilized with BHT)
- Flow rate: 1.0 ml/min
- Specimen concentration: 1.0 mg/ml
- Injection amount: 100 ul
- Column temperature: 30°C
- Detector: waters 2414 Refractive Index Detector
- Data processing: Empower 3

[Table 1]

| Division | | | Preparation Example | | | | | |
|---|---|---|---|---|---|---|---|---|
| | | | 1 | 2 | 3 | 4 | 5 | 6 |
| Core | Rubbery polymer | (parts by weight) | 80 | 80 | 80 | 80 | 80 | 80 |
| | Average particle diameter | (nm) | 300 | 255 | 338 | 300 | 300 | 300 |
| Shell | Methyl methacry late | (parts by weight) | 16 | 16 | 16 | 16 | 16 | 16 |
| | n-butyl acrylate | (parts by weight) | 3 | 3 | 3 | 3 | 3 | 3 |
| | Styrene | (parts by weight) | 1 | 1 | 1 | 1 | 1 | 1 |
| | Graft monomer injection method | | cont inuo us | cont inuo us | cont inuo us | continuo us | continuo us | continuo us |
| | Weight average molecula r weight | (g/mol) | 34, 1 00 | 32, 8 00 | 35, 1 00 | 17,4 00 | 38,7 00 | 43,2 00 |
| Graft copol ymer | Average particle diameter | (nm) | 318 | 264 | 374 | 320 | 325 | 321 |

As shown in Tables 1 above, it could be confirmed that the graft copolymers prepared in Preparation Examples 1 to 6 included the same amount of the cores and shells, but showed different average particle diameters of the cores and the graft copolymers and different weight average molecular weights of the shells.

**Experimental Example 2**

With respect to the epoxy resin compositions prepared in Examples 1 to 6 and Comparative Examples 1 to 5, the viscosity, thixotropic index, and restoring force were measured and shown in Tables 2 and 3.

* Viscosity at 25°C (Pa.s): With respect to the epoxy resin composition prepared, a viscosity at 25°C was measured using a cone & plate viscometer (Anton Paar Co., MCR302), using a spindle of Plate PP25 with a diameter of 25 mm, and a viscosity value at a shear rate of 2.4 l/s, 100 s is shown.
* Thixotropic index: With respect to the epoxy resin composition prepared, a viscosity was measured by changing a shear rate from 2.4 l/s to 24 l/s at 25°C, using the same viscometer as the viscometer used for the measurement of the viscosity at 25°C, and the thixotropic index was calculated by Mathematical Equation 1 below and shown.

[Mathematical Equation 1]

Thixotropic index = [viscosity at 25°C (Pa.s) at 2.4 1/s] / [viscosity at 25°C (pa.s) at 24 1/s]

* Restoring force (%): With respect to the epoxy resin composition prepared, a viscosity was measured when changing a shear rate according to steps (1) to (3) below, by using the same viscometer as the viscometer used for the measurement of the viscosity at 25°C, and a restoring force was calculated by Mathematical Equation 2 below and shown.

(1) a shear rate of 2.4 1/s at 25°C,
(2) a shear rate of 24 1/s at 25°C,
(3) a shear rate of 2.4 1/s at 25°C,

[Mathematical Equation 2]

Restoring force = [(viscosity at 25°C (pa.s) measured in (3))/(viscosity at 25°C (pa.s) measured in (1))] X 100

[Table 2]

| Division | | Example | | | | | |
|---|---|---|---|---|---|---|---|
| | | 1 | 2 | 3 | 4 | 5 | 6 |
| Viscosity at 25°C | (Pa.s) | 866 | 1,489 | 955 | 519 | 1,326 | 1,968 |
| Thixotropic index | | 1.9 | 2.0 | 2.2 | 1.6 | 1.9 | 2.1 |
| Restoring force | (%) | 75 | 61 | 72 | 73 | 79 | 78 |

[Table 3]

| Division | | Comparative Example | | | | |
|---|---|---|---|---|---|---|
| | | 1 | 2 | 3 | 4 | 5 |
| Viscosity at 25°C | (Pa.s) | 392 | 461 | 2,950 | 3, 162 | 6, 160 |
| Thixotropic index | | 1.0 | 1.2 | 2.4 | 5.3 | 8.4 |
| Restoring force | (%) | 88 | 92 | 48 | 40 | 30 |

As shown in Tables 2 and 3 above, it could be confirmed that the curable resin composition according to an embodiment of the present invention satisfied the viscosity range, and the thixotropic index was an appropriate level, and the restoring force was excellent.

On the contrary, it could be confirmed that the curable resin compositions of Comparative Examples 1 and 2 showed very low viscosity and inferior thixotropy, and it could be confirmed that the curable resin composition of Comparative Example 3 showed deteriorated restoring force due to increased viscosity. In addition, it could be confirmed that the curable resin compositions of Comparative Examples 4 and 5 showed very high viscosity, inferior thixotropy and markedly reduced restoring force.

**Experimental Example 3**

By using the epoxy resin composition prepared in Experimental Example 2, a structural adhesive composition was prepared by a method below. With respect to the structural adhesive composition, the viscosity, thixotropic index and restoring force were measured by the same method as in Experimental Example 2 and are shown in Tables 4 and 5.

<Structural adhesive composition>

Based on 100 parts by weight of the total amount of a main agent, a toughening agent, a urethane resin and a diluent, 60.0 parts by weight of an epoxy resin (Kukdo Chemical Co., YD-128) as a main agent, 15.0 parts by weight of each of the epoxy resin compositions according to Examples 1 to 6 and Comparative Examples 1 to 5 as a toughening agent, 20.0 parts by weight of a urethane resin (Adeka Co., QR-9466), 5.0 parts by weight of a diluent (Kukdo Finechem Co., KF EPI0L DE208), 6.0 parts by weight of a curing agent (Evonik Co., Dicyanex 1400F), 0.6 parts by weight of a curing accelerator (Evonik Co., Amicure UR7/10), 3.0 parts by weight of potassium oxide (Youyeong Materials Co., UNI-OX), and 3.0 parts by weight of fumed silica (Carbot Co., CAB-O-SIL TS-720) were mixed using a paste mixer (KMTECH Co., PDM-300) at 600 rpm revolution and at 500 rpm rotation for 3 minutes, and defoamed at 600 rpm revolution and at 200 rpm rotation for 5 minutes to prepare an adhesive composition.

[Table 4]

| Division | | Example | | | | | |
|---|---|---|---|---|---|---|---|
| | | 1 | 2 | 3 | 4 | 5 | 6 |
| Viscosity at 25°C | (Pa.s) | 373 | 686 | 434 | 268 | 509 | 582 |
| Thixotropic index | | 1.7 | 1.5 | 1.5 | 1.8 | 1.6 | 1.7 |
| Restoring force | (%) | 72 | 74 | 86 | 69 | 73 | 75 |

[Table 5]

| Division | | Comparative Example | | | | |
|---|---|---|---|---|---|---|
| | | 1 | 2 | 3 | 4 | 5 |
| Viscosity at 25°C | (Pa.s) | 353 | 443 | 492 | 474 | 466 |
| Thixotropic index | | 1.2 | 1.3 | 1.4 | 1.4 | 1.4 |
| Restoring force | (%) | 71 | 73 | 74 | 66 | 53 |

As shown in Tables 4 and 5, it could be confirmed that the structural adhesive compositions including the curable resin compositions of Examples 1 to 6 according to the present invention as toughening agents showed excellent thixotropic index and restoring force.

On the contrary, it could be confirmed that all the structural adhesive compositions including the curable resin compositions of Comparative Examples 1 to 5, of which viscosity was deviated from the range defined in the present invention, and which has insufficient thixotropy and restoring force, as toughening agents, showed inferior thixotropy. Particularly, the structural adhesive compositions according to Comparative Examples 4 and 5 showed deteriorated restoring force.

Such results could be achieved by controlling the viscosity, further, thixotropy and restoring force of the curable resin composition including the graft copolymer. In this case, the curable resin composition is required to control the viscosity, thixotropy and restoring force as the above-results, while being required to apply the graft copolymer in a particulate phase.

Here, in order to apply the graft copolymer in a particulate phase and to control the viscosity, thixotropy and restoring force of the curable resin composition as in the present invention, the content and the average particle diameter of the core of the graft copolymer and the weight average molecular weight of the shell are required to control. It could be confirmed from Examples 1 to 6 and Comparative Example 1 to 5 that though the content and the average particle diameter of the core are similar levels as the Examples, if the weight average molecular weight of the shell is high, the thixotropy and restoring force could not be controlled in the ranges defined in the present invention though the content of the graft copolymer in the curable resin composition could be controlled. That is, the viscosity, thixotropy and restoring force of the curable resin composition of the present invention could be achieved by controlling the graft copolymer applied in a particulate phase.

## Claims

**1.** A curable resin composition comprising a continuous phase and a dispersion phase,

wherein the continuous phase comprises a curable resin,
the dispersion phase comprises a graft copolymer, and
a viscosity at 25°C, measured using Plate PP25 with a diameter of 25 mm by a cone & plate viscometer, is from 500 Pa.s to 2,000 Pa.s.

**2.** The curable resin composition according to claim 1, wherein the curable resin composition has a viscosity at 25°C of 1,100 Pa.s to 2,000 Pa.s.

**3.** The curable resin composition according to claim 1, wherein the curable resin composition has a thixotropic index calculated by the following Mathematical Equation 1 of 1.5 to 2.5:

[Mathematical Equation 1]

Thixotropic index = [viscosity at 25°C (Pa.s) at 2.4 1/s] / [viscosity at 25°C (pa.s) at 24 1/s]

**4.** The curable resin composition according to claim 1, wherein the curable resin composition has a restoring force calculated by the following Mathematical Equation 2 of 60% or more when changing a shear rate according to the following steps (1) to (3):

(1) a shear rate of 2.4 1/s at 25°C,
(2) a shear rate of 24 1/s at 25°C,
(3) a shear rate of 2.4 1/s at 25°C,

[Mathematical Equation 2]

Restoring force = [(viscosity at 25°C (pa.s) measured in (3))/(viscosity at 25°C (pa.s) measured in (1))] X 100.

**5.** The curable resin composition according to claim 1, wherein the curable resin composition comprises the continuous phase in 50 wt% to 99 wt% and the dispersion phase in 1 wt% to 50 wt%.

**6.** The curable resin composition according to claim 1, wherein the curable resin is an epoxy resin.

**7.** The curable resin composition according to claim 1, wherein the graft copolymer is a core-shell type graft copolymer comprising a core comprising a rubbery polymer; and a shell formed by graft polymerizing a graft monomer to the rubbery polymer,

the graft copolymer comprises the core in 72 wt% to 83 wt%, and
the core has an average particle diameter of 250 nm or more.

**8.** The curable resin composition according to claim 7, wherein the rubbery polymer comprises one or more monomer units selected from the group consisting of a conjugated diene-based monomer unit and an alkyl acrylate-based monomer unit.

**9.** The curable resin composition according to claim 7, wherein the graft monomer comprises a methyl (meth)acrylate monomer, an alkyl (meth)acrylate-based monomer of 2 to 12 carbon number and a crosslinkable monomer.

**10.** The curable resin composition according to claim 7, wherein the graft monomer further comprises an aromatic vinyl-based monomer.

**11.** The curable resin composition according to claim 7, wherein the graft copolymer comprises the core in 75 wt% to 80 wt%, and the shell in 20 wt% to 25 wt%.

**12.** The curable resin composition according to claim 7, wherein an average particle diameter of the core is from 250 nm to 350 nm.

**13.** The curable resin composition according to claim 7, wherein the graft copolymer has a weight average molecular weight of the shell of 40,000 g/mol or less.

FIG. 1

GRAFT COPOLYMER LATEX
GRAFT COPOLYMER LATEX/SOLVENT/EPOXY RESIN
SOLVENT SUBSTITUTION
EPOXY RESIN
COMPOSITION
GRAFT COPOLYMER PARTICLE
WATER
SOLVENT
EPOXY RESIN

FIG. 2

GRAFT COPOLYMER LATEX
GRAFT COPOLYMER POWDER
GRAFT COPOLYMER POWDER/EPOXY RESIN POWDER DISPERSION
EPOXY RESIN COMPOSITION
GRAFT COPOLYMER PARTICLE
WATER
EPOXY RESIN

**INTERNATIONAL SEARCH REPORT**

International application No. **PCT/KR2022/012076**

**A. CLASSIFICATION OF SUBJECT MATTER**

**C08L 63/00**(2006.01)i; **C08L 51/04**(2006.01)i; **C08F 279/02**(2006.01)i; **C08F 212/08**(2006.01)i; **C08G 59/42**(2006.01)i

According to International Patent Classification (IPC) or to both national classification and IPC

**B. FIELDS SEARCHED**

Minimum documentation searched (classification system followed by classification symbols)

C08L 63/00(2006.01); C08F 110/10(2006.01); C08F 12/08(2006.01); C08F 20/06(2006.01); C08F 265/04(2006.01); C08F 279/04(2006.01); C08F 279/06(2006.01); C08L 27/24(2006.01); C08L 51/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 경화성 수지(curable resin), 코어-쉘(core-shell), 충격 보강제(impact modifier)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0060928 A (LG CHEM, LTD.) 02 June 2020 (2020-06-02)<br>See claims 1-3; and paragraphs [0032], [0036] and [0042]. | 1-13 |
| Y | KR 10-2016-0010182 A (LG CHEM, LTD.) 27 January 2016 (2016-01-27)<br>See claims 1 and 26. | 1-13 |
| A | KR 10-2012-0076826 A (CHEIL INDUSTRIES INC.) 10 July 2012 (2012-07-10)<br>See claims 1-9. | 1-13 |
| A | US 2010-0036022 A1 (SATO, N. et al.) 11 February 2010 (2010-02-11)<br>See entire document. | 1-13 |
| A | KR 10-2014-0096748 A (CHEIL INDUSTRIES INC.) 06 August 2014 (2014-08-06)<br>See entire document. | 1-13 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **17 November 2022** | **18 November 2022** |

Name and mailing address of the ISA/KR

**Korean Intellectual Property Office**
**Government Complex-Daejeon Building 4, 189 Cheongsa-ro, Seo-gu, Daejeon 35208**

Facsimile No. **+82-42-481-8578**

Authorized officer

Telephone No.

Form PCT/ISA/210 (second sheet) (July 2022)

**INTERNATIONAL SEARCH REPORT**
**Information on patent family members**

International application No.
**PCT/KR2022/012076**

| Patent document cited in search report | Publication date (day/month/year) | Patent family member(s) | Publication date (day/month/year) |
|---|---|---|---|
| KR 10-2020-0060928 A | 02 June 2020 | None | |
| KR 10-2016-0010182 A | 27 January 2016 | KR 10-1733843 B1 | 08 May 2017 |
| KR 10-2012-0076826 A | 10 July 2012 | None | |
| US 2010-0036022 A1 | 11 February 2010 | CN 101643569 A | 10 February 2010 |
| | | CN 101643569 B | 02 January 2013 |
| | | EP 2163579 A2 | 17 March 2010 |
| | | EP 2163579 A3 | 14 November 2012 |
| | | EP 2163579 B1 | 12 February 2014 |
| | | JP 2010-059388 A | 18 March 2010 |
| | | JP 2010-077305 A | 08 April 2010 |
| | | JP 4416046 B1 | 17 February 2010 |
| | | US 8017689 B2 | 13 September 2011 |
| KR 10-2014-0096748 A | 06 August 2014 | KR 10-1478027 B1 | 31 December 2014 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210107589
- JP 2006104328 A